# EUROPÄISCHE PATENTSCHRIFT

(11) **EP 1 997 412 B1**
(45) Veröffentlichungstag und Bekanntmachung des Hinweises auf die Patenterteilung: **31.10.2012**
(21) Anmeldenummer: 08008709.1
(22) Anmeldetag: 09.05.2008
(51) Int. Cl.: A47L 9/06

(54) **Verfahren zum Betreiben eines Staubsaugers**
Method for operating a vacuum cleaner
Procédé de fonctionnement d'un aspirateur

(30) Priorität: 30.05.2007 DE 102007025389
(43) Veröffentlichungstag der Anmeldung: 03.12.2008
(73) Patentinhaber: Miele & Cie. KG, 33332 Gütersloh (DE)
(72) Erfinder: Tiekötter, Stefan, 33699 Bielefeld (DE)

(56) Entgegenhaltungen:
- EP-A- 1 136 027
- DE-A1- 2 032 476
- DE-A1- 3 030 059
- DE-A1- 4 433 181
- DE-A1-102004 050 017
- DE-U1- 9 217 416

## Beschreibung

Die Erfindung betrifft ein Verfahren zum Betreiben eines Staubsaugers Nach dem Oberbegriff des Anspruchs 1.

Bei Staubsaugern wird die Saugkraft durch ein hochtouriges Gebläse erzeugt. Dieses drückt die Luft aus dem Staubsaugergehäuse heraus, so dass auf der Gegenseite infolge des entstehenden Unterdrucks Außenluft mit hoher Geschwindigkeit einströmt. Die Größe des erzeugten Unterdrucks ist etwa dem Quadrat der Gebläsedrehzahl proportional, was bedeutet, dass über die Drehzahl des Gebläsemotors die Saugleistung an der Düse verändert werden kann. Die Saugleistung hängt aber nicht nur vom Unterdruck, sondern auch von der aufgesaugten Luftmenge bzw. dem dabei erzeugten Durchfluss ab, sie ist das Produkt aus Unterdruck p und Durchfluss q. Da andererseits auch zwischen Unterdruck und Durchfluss ein linearer Zusammenhang besteht - je größer die aufgesaugte Luftmenge bzw. der Durchfluss, desto geringer der Unterdruck - wird die maximal mögliche Saugleistung dann abgegeben, wenn im Arbeitspunkt Durchfluss und Unterdruck die Hälfte ihres Höchstwertes besitzen. Bei jeder Abweichung von diesem optimalen Arbeitspunkt ändern sich Durchfluss und Unterdruck und damit die effektive Saugleistung. Eine solche Verschiebung des Arbeitspunkts tritt in der Praxis immer dann auf, wenn der Querschnitt des Luftwegs im Bereich zwischen dem Lufteintritt und dem Gebläse verändert wird. Dieser Querschnitt ist abhängig vom gewählten Saugwerkzeug, vom Füllzustand des Staubbeutels oder ähnlicher Abscheider, vor allem aber von der zu reinigenden Oberfläche. Es hat sich gezeigt, dass sich sowohl bei hochflorigen Teppichen als auch bei angesaugten Objekten der Durchfluss der angesaugten Luft verringert und der durch das Sauggebläse hervorgerufene Unterdruck steigt. Durch die Charakteristik des Staubsaugermotors wird dieser Effekt meist noch dadurch verstärkt, dass durch das geringere Lastmoment die Drehzahl des Motors ansteigt und dadurch der Unterdruck weiter verstärkt wird.

Es ist bekannt, den Staubsauger mit einem manuellen Leistungssteller auszustatten. Vor allem beim Ein- und Ansaugen eines Objektes, wie zum Beispiel eines Vorhanges, muss aber die Saugleistung möglichst schnell reduziert werden, um Schäden am Objekt und am Staubsauger zu vermeiden. Bei Staubsaugern im mittleren und unteren Preisbereich wird deswegen ein sogenanntes Nebenluftventil eingesetzt, siehe beispielsweise DE 10 2004 050 017 A1. Bei Staubsaugern der oberen Preisklasse erfolgt eine automatische Saugleistungsregelung mit Begrenzung des Unterdrucks, siehe beispielsweise DE 44 33 181 C2. Hierzu wird im Luftweg ein Drucksensor eingesetzt, der auf Unterdruckänderungen infolge jeder Änderung der geförderten Luftmenge reagiert. Der Sensor gibt diese Information an die Geräteelektronik weiter, die ihrerseits die Gebläsedrehzahl ändert, bis ein vorgegebener Wert des Unterdrucks wieder erreicht ist. Alternativ ist die Anpassung des Unterdrucks durch Änderung der Gebläsemotor-Leistung möglich, was bei den heute in Staubsaugern verwendeten Universalmotoren mittels einer Phasenanschnittsteuerung erfolgt.

Alle vorbeschriebenen Regelungen haben gemeinsam, dass als Stellgröße die an den Motor abgegebene elektrische Leistung und als Regelgröße der erzeugte Unterdruck bzw. die davon abhängige Saugleistung verwendet wird. Ein geänderter Durchflussquerschnitt hat deshalb mit oder ohne Regelung aufgrund des veränderten Lastmoments an den Gebläseschaufeln automatisch eine Änderung der Motor- bzw. Gebläsedrehzahl zur Folge. Das Geräusch, dass während des Betriebs vom Sauggebläse erzeugt wird, hängt im wesentlichen von zwei Faktoren ab, nämlich von der Gebläsedrehzahl und vom Durchfluss. Während die Drehzahl in erster Linie die Frequenz beeinflusst, hat der Durchfluss Auswirkungen auf die Lautstärke. Insbesondere Lautstärkeschwankungen werden von einigen Benutzern als unangenehm empfunden.

Es ist auch bekannt, bei Staubsaugern eine geräuschreduzierte ungeregelte Leistungsstufe anzubieten, in der der Staubsauger mit einer geringeren Leistung betrieben wird. Die geringere Leistung bedingt eine reduzierte Drehzahl und einen damit ebenfalls herabgesetzten Durchfluss.

Aus der DE 20 32 476 A1 ist ein Staubsauger bekannt, dessen Motordrehzahl sich selbsttätig an verschiedene Arbeitsprozesse anpasst. Hierzu wird der Durchfluss konstant gehalten und demzufolge als Regelgröße in der Art beeinflusst, dass sich ein vom Bodenbelag abhängiger Durchflusswert einstellt. Auch aus der DE 3030059 A1 ist ein Staubsauger bekannt, bei dem trotz Änderungen des Strömungswiderstandes der Durchfluss - hier als Saugluftstrom bezeichnet - konstant eingeregelt wird. Dabei wird nicht berücksichtigt, dass nicht alle Bodenbeläge mit dem gleichen einheitlichen Durchfluss zufriedenstellend gereinigt werden können

Es ist Aufgabe der vorliegenden Erfindung ein Verfahren zum Betreiben eines Staubsaugers zu schaffen, bei dem die genannten Nachteile vermieden werden und bei dem das Betriebsgeräusch bei der Reinigung eines Bodenbelags möglichst konstant gehalten wird.

Zur Lösung dieser Aufgabe wird ein Verfahren mit den Merkmalen des Anspruches 1 vorgeschlagen. In den abhängigen Ansprüchen sind bevorzugte Weiterbildungen ausgeführt. Dazu ist erfindungsgemäß vorgesehen, dass mittels der Regeleinrichtung der vom Sauggebläse erzeugte Durchfluss als Regelgröße beeinflusst wird und dass eine Auswerteschaltung ggfs. unter Verwendung eines Sensors die Art des zu bearbeiteten Bodenbelags ermittelt und die Regeleinrichtung in Abhängigkeit vom ermittelten Bodenbelag die Motorleistung bzw. den die Motorleistung beeinflussenden Parameter derart beeinflusst, dass sich ein vom Bodenbelag abhängiger Durchflusswert einstellt. Hierdurch wird dem Umstand Rechnung getragen, dass nicht alle Bodenbeläge mit dem gleichen einheitlichen Durchfluss zufriedenstellend gereinigt werden können. Insbesondere bei Glattböden ist aufgrund der geringen "Verstopfung" der Saugdüse der Durchflussquerschnitt so hoch, dass sich beim Erreichen einer zufriedenstellenden Saugleistung ein wesentlich höherer Durchfluss einstellt als bei einem Teppichboden. Es ist ausreichend, wenn die Regeleinrichtung zwischen diesen beiden Kategorien unterscheidet und bei Erkennung eines Glattbodens einen ersten und bei Erkennung eines Teppichbodens einen zweiten Durchflusswert einregelt, wobei der erste Durchflusswert höher als der zweite ist. Da während eines Saugvorgangs in der Regel nur eine dieser beiden Belagsarten gereinigt wird, wird der Benutzer dann auch nur mit einem einzigen Durchflusswert und damit mit einem gleichförmigen Betriebsgeräusch konfrontiert. Die Regeleinrichtung regelt dann auch Schwankungen aus, die sich beispielsweise aus der Änderung der Durchlässigkeit des Staubbeutels, unterschiedlichem Druck auf die Saugdüse, insbesondere während der Vorwärts- und Rückwärtsbewegung, oder anderen Variationen ergeben.

Die Auswerteschaltung kann die Art des Bodenbelags mittels eines optischen oder akustischen Bodenbelagssensors ermitteln. Vorteilhaft ist es jedoch, wenn die Auswerteschaltung die Art eines ersten Bodenbelags durch das Maß der Drehzahländerung beim Wechsel vom Leerlaufbetrieb zum Reinigungsbetrieb des ersten Bodenbelags erkennt. Bei einem Wechsel vom Reinigungsbetrieb eines ersten Bodenbelags zum Reinigungsbetrieb eines zweiten Bodenbelags erkennt die Auswerteschaltung die Art des zweiten Bodenbelags durch das Maß der Drehzahländerung bei diesem Wechsel. Bei dem Gebläsemotor kann es sich um einen Universalmotor handeln, dann ist ein zusätzlicher Sensor zur Erkennung der Drehzahl notwendig. Wenn ein elektronisch kommutierter Motor verwendet wird, so muss zur Bestromung der Ständerwicklung(en) die Position des Rotors bekannt sein. Diese kann entweder durch einen Lagesensor oder rechnerisch aus dem Verlauf des Motorstroms ermittelt werden. In beiden Fällen ist es möglich, aus der zeitlichen Änderung der Position die Drehzahl zu ermitteln, folglich ist kein zusätzlicher Sensor erforderlich. Zum Antrieb eines Staubsaugergebläses wird dann in vorteilhafter Weise ein Reluktanzmotor verwendet, weil dessen Rotor einen robusten Aufbau besitzt, der Drehzahlen im Bereich von 100.000 min⁻¹ standhält.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Figur 1: eine schematische Darstellung eines Staubsaugers;
- Figur 2 a, b: den prinzipiellen Aufbau eines geschalteten Reluktanzmotors;
- Figur 3: das Bedienfeld des Staubsaugers gemäß Figur 1;
- Figur 4: ein Durchfluss-Unterdruck-Diagramm;
- Figur 5: ein Durchfluss-Drehzahl-Diagramm;
- Figur 6: ein schematisches Diagramm eines handelsüblichen Staubsaugers mit einer Gebläsekennlinie und drei Lastkennlinien für unterschiedliche Bodenbeläge und
- Figur 7: ein schematisches Diagramm mit einer Gebläsekennlinie und zwei Lastkennlinien eines Bodenbelages, die sich hinsichtlich des Füllgrades des Staubaufnahmebehältnisses unterscheiden;
- Figur 8: das Drehzahlverhalten des Sauggebläses beim Wechsel zwischen unterschiedlichen Bodenbelägen.

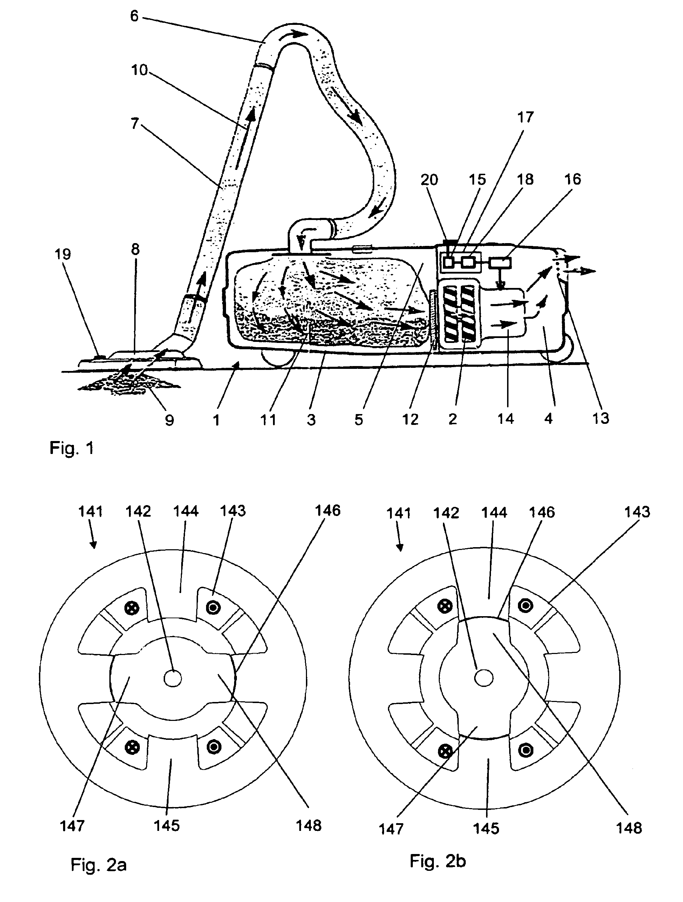

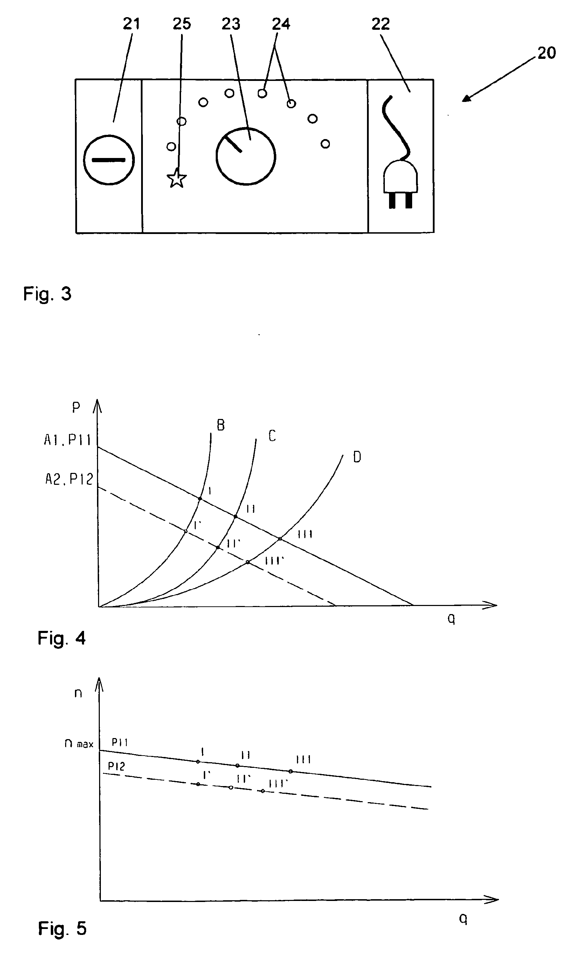

Zur näheren Erläuterung ist in Figur 1 schematisch ein Bodenstaubsauger dargestellt, das erfindungsgemäße Verfahren kann jedoch in jedem Staubsauger 1, der mit einem motorbetriebenen Sauggebläse 2 ausgestattet ist, durchgeführt werden. Als weitere, nicht dargestellte Beispiele seien hier Handstaubsauger, Uprights oder Robotsauger genannt. Der gezeigte Staubsauger 1 besitzt ein Gehäuse 3, welches in einen Gebläseraum 4 und einen Staubsammelraum 5 unterteilt ist. Im Gebläseraum 4 ist ein Sauggebläse 2 mit seiner Saugseite zum Staubsammelraum 5 gerichtet und erzeugt dort einen Unterdruck, der über einen angeschlossenen Saugschlauch 6 und ein Saugrohr 7 an den Saugmund einer Bodendüse 8 weitergegeben wird. Somit wird mit Schmutz 9 beladene Luft, durch die Pfeile 10 symbolisiert, am bearbeiteten Untergrund aufgesaugt und über Staubabscheider gereinigt. Im Ausführungsbeispiel ist dies ein Staubbeutel 11 mit nachgeschaltetem Motorfilter 12 und Abluftfilter 13. Die gereinigte Luft wird wieder an die Umgebung abgegeben. Die Ansteuerung des in den Figuren 2a und b näher gezeigten Gebläsemotors 14 erfolgt über eine Regeleinrichtung, welche durch die Regelelektronik 15 eines Wechselrichters gebildet wird. Die Regelelektronik 15 schaltet Leistungshalbleiter 16 und ist Bestandteil einer als Kasten symbolisierten Mikroprozessor-Steuerung 17. Die Mikroprozessor-Steuerung 17 enthält außerdem eine Auswerteschaltung 18 zur Erkennung des Bodenbelags und steht in Verbindung mit einer in Figur 3 dargestellten Bedien- und Anzeigeeinrichtung 20. Der Staubsauger 1 kann neben der Auswerteschaltung 18 noch einen in der Bodendüse 8 angeordneten Bodenbelagssensor, beispielsweise einen Ultraschallsensor 19 mit entsprechender Auswerteelektronik besitzen.

Im gezeigten Staubsauger wird zum Antrieb des Sauggebläses 2 ein geschalteter Reluktanzmotor 141 (siehe Figuren 2a und b) verwendet. Der Vorteil eines geschalteten Reluktanzmotors 141 liegt in seinem einfachen und robusten Aufbau sowie seinen verschleißfreien Bauteilen. Er gehört in die Gruppe der bürstenlosen Antriebe, weist also keinen Kollektor oder verschleißbehaftete Kohlebürsten auf. Des Weiteren besteht sein Rotor 142 ausschließlich aus Eisen, benötigt also weder Elektro- noch Permanentmagnete im Rotor. Aus diesem Grund eignet er sich insbesondere für Anwendungen, in denen hohe Drehzahlen benötigt werden, zum Beispiel für Staubsaugergebläse 2.

Anders als bei herkömmlichen Antrieben erzeugt der geschaltete Reluktanzmotor 141 sein Drehmoment nicht durch die Lorenzkraft, sondern durch Reluktanzkraft. Die Funktion der Maschine beruht darauf, dass Luft im Vergleich zum Eisenmaterial einen sehr hohen magnetischen Widerstand (Reluktanz) besitzt. Wenn die Spulen 143 eines Polpaares der Ständerwicklung bestromt werden, schließt sich der magnetische Fluss, der in den Statorzähnen 144 und 145 erzwungen wird, über den Luftspalt 146 und den Rotor 142. Es entsteht eine Reluktanzkraft die den Rotor 142 in eine Position zwingt, in der der magnetische Widerstand möglichst gering ist. Da heißt, dass der magnetische Fluss größtenteils durch das Eisenmaterial geht und nicht über die Luft. Es gibt im Allgemeinen zwei Rotorstellungen in denen das Moment gleich Null ist. Dies ist zum einen die Stellung, in der die Rotorpole 147 und 148 den Statorpolen 144 und 145 direkt gegenüber stehen und damit der geringste magnetische Widerstand erreicht ist (ausgerichtete Position Figur 2a), und zum anderen, wenn zwei benachbarte Rotorpole (hier die Rotorpole 147 und 148) im gleichen Abstand zum bestromten Statorpol stehen (unausgerichtete Position Figur 2b). Zwischen diesen beiden Positionen entsteht ein Drehmoment, wenn die Spulen des entsprechenden Polpaares 144 und 145 bestromt werden. Um eine kontinuierliche Drehbewegung zu erreichen, müssen die verschiedenen Polpaare abhängig von der Rotorposition nacheinander geschaltet werden. Aus diesem Grund ist es prinzipbedingt notwendig, die Rotorposition des geschalteten Reluktanzmotors 141 zu detektieren.

Die Ansteuerung eines geschalteten Reluktanzmotors 141 erfolgt über den weiter oben beschriebenen Wechselrichter, dessen Regelelektronik 15 die Leistungsschalter 16 ansteuert und damit die angeschlossenen Spulen 143 in Abhängigkeit von der Rotorlage bestromt. Die Rotorposition vom Einschalten bis zum Ausschalten eines Spulenpaares wird als Leitbereich bezeichnet. Innerhalb dieses Bereichs erzeugt der Motor ein Drehmoment. Mit dem Leitbereich variiert man direkt das Motormoment und damit letztendlich die Motorleistung.

Beim geschalteten Reluktanzmotor hat man damit ohne zusätzliche Sensoren die Kenntnis über die Drehzahl und das Drehmoment in jedem Betriebspunkt und kann über den Leitbereich als Stellgröße das Staubsaugergebläse in den gewünschten Arbeitspunkt regeln.

In Figur 3 ist die Bedien- und Anzeigeeinrichtung 20 dargestellt. Seitlich sind ein Ein-AusSchalter 21 und eine Kabel-Rückhol-Taste 22 angeordnet. Zentral befindet sich ein Drehschalter 23, mit dem unterschiedliche Leistungsstufen 24 eingestellt werden. Zusätzlich ist die Einstellung einer sogenannten Noise-Control-Stufe 25 vorgesehen, in der mittels der Regelelektronik 15 der vom Sauggebläse 2 erzeugte Durchfluss als Regelgröße beeinflusst wird.

Der Saugbetrieb in dieser Noise-Control-Stufe ist im Folgenden beschrieben:

Zur Erklärung der theoretischen Grundlagen zeigt Figur 4 die Abhängigkeit des Unterdrucks vom Durchfluss. Strömungstechnisch ergibt sich der aerodynamische Arbeitspunkt eines Staubsaugers als Schnittpunkt der Gebläsekennlinie, einer fallenden Gerade, mit einer Parabel, die die Verengung des Querschnitts des Luftwegs (Last) symbolisiert. Die Figur zeigt drei Lastkennlinien B, C, D mit unterschiedlich starker Verengung des Luftwegs durch Bodenbeläge unterschiedlicher Florigkeit, wobei die Parabel D mit dem flachsten Verlauf einem Glattboden, die Parabel C einem Teppich mit mittlerer Florigkeit und die Parabel B einem hochflorigen Teppich entspricht. Die Gebläsekennlinie A1 lässt sich durch Veränderung der Aufnahmeleistung P11 des Staubsaugers parallel verschieben, A2 zeigt gestrichelt eine Gebläsekennlinie bei reduzierter Leistung P12. Die Arbeitspunkte I, II, III zeigen die Betriebszustände bei der Leistung P11, die Arbeitspunkte I', II' bzw. III' stellen sich bei reduzierter Leistung P12 ein.

Eine Variation der Leistung bewirkt gleichzeitig eine Erhöhung oder Reduzierung der Gebläsedrehzahl n und des Durchflusses q. Figur 5 zeigt den Zusammenhang zwischen der Gebläse- bzw. Motordrehzahl und dem Durchfluss (n = f(q)-Diagramm) bei zwei verschiedenen Leistungen P11 und P12 sowie den zum p = f(q) Diagramm korrelierenden Arbeitspunkten I, II und III. Ändert sich der Bodenbelag (B, C, D), so erzwingt dies neben einer Veränderung des Unterdrucks p gleichzeitig eine Drehzahl- und Durchflussänderung.

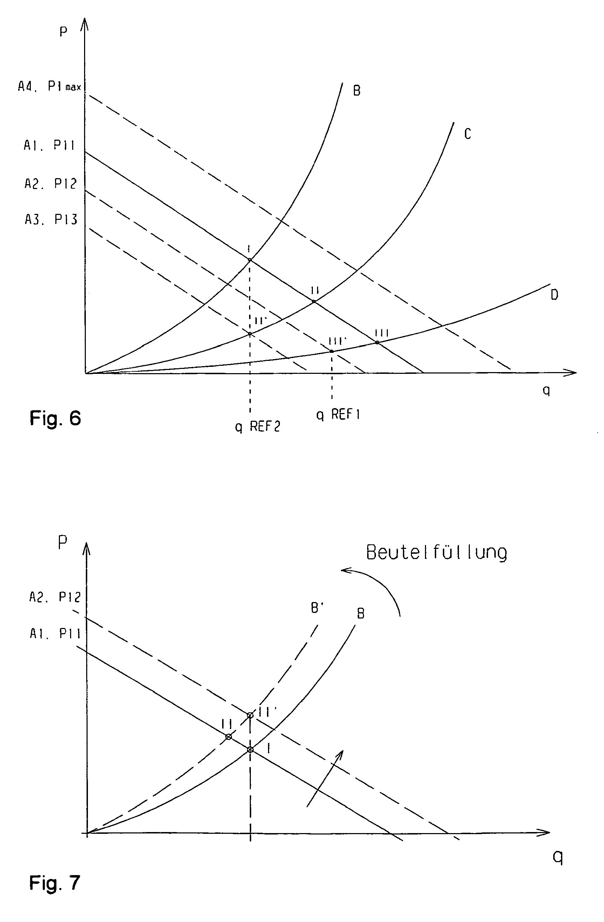

In Figur 6 und 7 sind Diagramme dargestellt, die dem aus Figur 4 ähnlich sind. Figur 6 zeigt verschiedene Gebläsekennlinien A1 bis A4. Des Weiteren sind drei Lastkennlinien B, C und D dargestellt, wobei die erste Lastkennlinie B sich auf einen florigen Teppich (Wilton), die zweite Lastkennlinie C auf einen niederflorigen Teppich (Duracord) und die dritte Lastkennlinie D auf einen Glattboden (Parkett, Fliesen etc.) bezieht. Das Geräuschniveau des Staubsaugers 1 ergibt sich aus dem Durchfluss, der sich im Schnittpunkt der Gebläsekennlinie mit der Lastkennlinie einstellt.

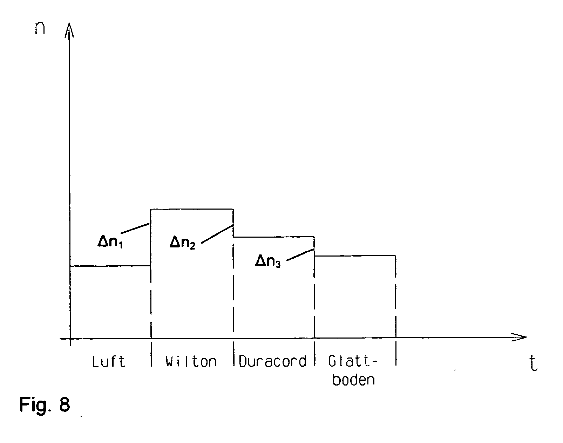

Zum Saugen des Bodenbelags Wilton (Kennlinie B) hat der Benutzer zuerst mit dem Drehschalter 23 die Noise-Control-Stufe 25 eingestellt. Nun betätigt er noch den Ein-AusSchalter 21 und schaltet das Sauggebläse 2 ein. Dabei befindet ist die Bodendüse 8 noch vom Teppich abgehoben. Es stellt sich ein hoher Durchfluss bei entsprechend niedriger Drehzahl ein. Anschließend setzt der Benutzer die Bodendüse auf den Bodenbelag Wilton auf. Die Auswerteschaltung 18 erkennt aufgrund der Größe des Drehzahlsprungs Δn₁ (siehe Figur 8), dass es sich um Wilton handelt und gibt diese Information an die Regelelektronik 15 weiter. Wenn vorhanden, kann die Art des Bodenbelags alternativ oder zusätzlich durch den Ultraschallsensor 19 ermittelt werden. Die Regelelektronik 15 ordnet den Bodenbelag der zweiten Kategorie (Teppich) zu und stellt eine Leistung P11 (Gebläsekennlinie A) ein, die unterhalb von P1 max (Gebläsekennlinie A4) liegt. Es stellt sich der Arbeitspunkt I mit einem Durchfluss q_{ref2} und einem bestimmten Geräuschniveau ein. Der Geräuschpegel wird unter anderem durch die Strömungsgeräusche bestimmt, die der Staubsauger bei dem entsprechenden Bodenbelag aufweist.

Wechselt nun der Benutzer während des Staubsaugens vom Wilton auf den niederflorigen Bodenbelag Duracord (Kennlinie C), stellt sich zunächst ein höherer Durchfluss q ein und der Arbeitspunkt II wird erreicht. Durch den höheren Durchfluss sinkt die Gebläsedrehzahl, gleichzeitig steigt die Geräuschemission. Die Auswerteschaltung 18 erkennt die Bodenbelags-Art durch die Größe Δn₂ des Drehzahlsprungs (siehe Figur 8), der sich beim Wechsel einstellt. Auch hier kann alternativ oder zusätzlich der Ultraschallsensor 19 eingesetzt werden. Die Regelelektronik 15 ordnet diesen Bodenbelag ebenfalls der zweiten Kategorie (Teppich) zu. In diesem Punkt setzt das erfindungsgemäße Verfahren ein, welches die aktuelle Leistung P11 des Motors 14 so anpasst, dass sich der Durchfluss q_{ref2}, bezogen auf den Arbeitspunkt I, der als Bezugswert für das gewünschte Geräuschniveau verwendet wird, einstellt. Die Leistung des Motors 14 wird durch die Regelelektronik 15 auf P13 herabgesetzt, bis der Arbeitspunkt II' auf der Gebläsekennlinie A3 erreicht ist. Wie aus Figur 6 zu erkennen ist, verschiebt sich der Arbeitspunkt 12 entlang der Lastkennlinie C, bis der Durchfluss q_{ref2} erzielt wird, der im Arbeitspunkt I vorgelegen hat. Die Geräuschemission wird somit wirksam reduziert.

Bearbeitet der Benutzer einen glatten Bodenbelag, stellt sich bei einer Ausgangsleistung P11 ein Arbeitspunkt III ein, der im Schnittpunkt der Gebläsekennlinie A1 und der Lastkennlinie D liegt. Über die Auswerteschaltung 14 erhält die Regelelektronik 15 die Information (Drehzahlsprung Δn₃, s. Figur 8), dass der aktuell zu reinigende Bodenbelag ein glatter Bodenbelag ist. Im Gegensatz zu einem Wechsel von einem hochflorigen Bodenbelag zu einem glatten Bodenbelag wird hier nicht versucht, den Durchflusswert q_{ref2} zu erreichen, denn dafür müsste die Motorleistung so stark reduziert werden, dass der Reinigungserfolg darunter leiden würde. Die Regelelektronik 15 ordnet diesen Bodenbelag deshalb der ersten Kategorie (Glattboden) zu und gibt einen Referenz-Durchflussert q_{ref1} vor. Sie reduziert die im Betriebspunkt III vorliegende Leistung P11 auf eine Leistung P12, wodurch sich der Betriebspunkt III' einstellt.

Das erfindungsgemäße Verfahren berücksichtigt ebenfalls, dass sich während des Saugbetriebs der Beutel 11 mit Staubpartikeln füllt. In Figur 7 ist ein Diagramm dargestellt, welches Gebläsekennlinien A1 und A2 sowie die Lastkennlinien B und B' zeigt. Die Lastkennlinie B bezieht sich auf den florigen Bodenbelag Wilton, wobei der Beutel 6 leer ist. Die Lastkennlinie B' bezieht sich auf den gleichen Belag, allerdings ist der Beutel voll. Wie aus Figur 7 zu erkennen ist, liegt der Arbeitspunkt I im Schnittpunkt der Lastkennlinie B und der Gebläsekennlinie A1. Der Arbeitspunkt I sei der Durchfluss-Bezugswert q_{ref2} für den einzuhaltenden Geräuschpegel. Füllt sich nun während des Staubsaugens der Beutel 11, verschiebt sich die Lastkennlinie nach B'. Bei einem vollen Beutel 11 liegt ein reduzierter Durchfluss q vor, so dass sich der Arbeitspunkt II auf der Lastkennlinie B' einstellt. Somit wird der Staubsauger 1 tendenziell leiser. Um den Referenz-Durchfluss q_{ref2} bezogen auf den Arbeitspunkt I wieder zu erreichen, muss die Leistung auf P12 erhöht werden. Es stellt sich ein Betriebspunkt II' ein, der oberhalb des Betriebspunktes I liegt und den gleichen Durchfluss q_{ref2} besitzt. Durch dieses Verfahren kann über die gesamte Beutelbefüllung hinweg ein im wesentlichen konstanter Geräuschpegel erzielt werden. Die auf die Beutelbefüllung reagierende Durchflussregelung kann selbstverständlich mit dem dargestellten Verfahren gemäß Figur 6 kombiniert werden.

## Patentansprüche

1. Verfahren zum Betreiben eines Staubsaugers (1) mit einem Sauggebläse (2), welches durch einen elektrischen Gebläsemotor (3) angetrieben wird, und mit einer auf den Gebläsemotor (14) einwirkenden Regeleinrichtung (15), welche als Stellgröße die Motorleistung (P1, P1i) bzw. einen die Motorleistung (P1, P1i) beeinflussenden Parameter vorgibt, wobei mittels der Regeleinrichtung der vom Sauggebläse (2) erzeugte Durchfluss (q) als Regelgröße beeinflusst wird,
**dadurch gekennzeichnet,**
**dass** eine Auswerteschaltung (18) ggfs. unter Verwendung eines Sensors (19) die Art des zu bearbeiteten Bodenbelags ermittelt und dass die Regeleinrichtung (15) in Abhängigkeit vom ermittelten Bodenbelag die Motorleistung (P1, P1i) bzw. den die Motorleistung (P1, P1i) beeinflussenden Parameter derart beeinflusst, dass sich ein vom Bodenbelag abhängiger Durchflusswert (q_{refi}) einstellt.

2. Verfahren zum Betreiben eines Staubsaugers (1) nach Anspruch 1,
**dadurch gekennzeichnet,**
**dass** die Regeleinrichtung (15) die von der Auswerteschaltung (18) ermittelte Bodenbeschaffenheit entweder einer ersten Kategorie oder einer zweiten Kategorie zuordnet, und dass die Regeleinrichtung (15) bei Vorliegen der ersten Kategorie einen ersten Durchflusswert (q_{ref1}) und bei Vorliegen der zweiten Kategorie einen zweiten Durchflusswert (q_{ref2}) einregelt.

3. Verfahren zum Betreiben eines Staubsaugers (1) nach Anspruch 2,
**dadurch gekennzeichnet,**
**dass** die erste Kategorie im wesentlichen Glattböden und die zweite Kategorie im wesentlichen Teppiche beinhaltet, und dass der erste Wert (q_{ref1}) höher als der zweite Wert (q_{ref2}) ist.

4. Verfahren zum Betreiben eines Staubsaugers (1) nach einem der Ansprüche 1 bis 3,
**dadurch gekennzeichnet,**
**dass** die Auswerteschaltung (18) die Art des Bodenbelags mittels eines optischen oder akustischen Bodenbelagssensors (19) ermittelt.

5. Verfahren zum Betreiben eines Staubsaugers (1) nach einem der Ansprüche 1 bis 3,
**dadurch gekennzeichnet,**
**dass** die Auswerteschaltung (18) die Art eines ersten Bodenbelags durch das Maß der Drehzahländerung (Δn₁) beim Wechsel vom Leerlaufbetrieb zum Reinigungsbetrieb des ersten Bodenbelags erkennt.

6. Verfahren zum Betreiben eines Staubsaugers (1) nach Anspruch 5,
**dadurch gekennzeichnet,**
**dass** die Auswerteschaltung (18) bei einem Wechsel vom Reinigungsbetrieb eines ersten Bodenbelags zum Reinigungsbetrieb eines zweiten Bodenbelags die Art des zweiten Bodenbelags durch das Maß der Drehzahländerung (Δn₂) bei diesem Wechsel erkennt.

7. Verfahren zum Betreiben eines Staubsaugers (1) nach mindestens einem der vorhergehenden Ansprüche,
**dadurch gekennzeichnet,**
**dass** als Gebläsemotor (14) ein Universalmotor verwendet wird.

8. Verfahren zum Betreiben eines Staubsaugers (1) nach mindestens einem der Ansprüche 1 bis 6,
**dadurch gekennzeichnet,**
**dass** als Gebläsemotor (14) ein elektronisch kommutierter Motor verwendet wird.

9. Verfahren zum Betreiben eines Staubsaugers (1) nach Anspruch 8,
**dadurch gekennzeichnet,**
**dass** als Gebläsemotor (14) ein geschalteter Reluktanzmotor (141) verwendet wird.

## Claims

1. Method for operating a vacuum cleaner (1) comprising a suction fan (2) which is driven by an electric fan motor (3), and comprising a control device (15) which acts on the fan motor (14) and predefines, as a regulating variable, the motor power (P1, P1i) or a parameter influencing the motor power (P1, P1i), the flow rate (q) produced by the suction fan (2) being influenced as a controlled variable by means of the control device, **characterised in that**
an evaluation circuit (18), using a sensor (19) if required, determines the nature of the floor covering to be treated, and **in that**, depending on the determined floor covering, the control device (15) influences the motor power (P1, P1 i) or the parameter influencing the motor power (P1, P1i) in such a way that a flow rate value (q_{ref1}) emerges which is dependent on the floor covering.

2. Method for operating a vacuum cleaner (1) according to claim 1,
**characterised in that**
the control device (15) assigns the floor conditions determined by the evaluation circuit (18) to either a first category or a second category, and **in that** the control device adjusts, in the presence of the first category, a first flow rate value (q_{ref1}), and in the presence of the second category, a second flow rate value (q_{ref2}).

3. Method for operating a vacuum cleaner (1) according to claim 2,
**characterised in that**
the first category essentially includes smooth floors and the second category essentially includes carpets, and **in that** the first value (q_{ref1}) is higher than the second value (q_{ref2}).

4. Method for operating a vacuum cleaner (1) according to any of claims 1 to 3, **characterised in that**
the evaluation circuit (18) determines the nature of the floor covering by means of an optical or acoustic floor covering sensor (19).

5. Method for operating a vacuum cleaner (1) according to any of claims 1 to 3, **characterised in that**
the evaluation circuit (18) detects the nature of a first floor covering by measuring the change in rotation speed (Δn₁) when switching from the idle mode to the mode for cleaning the first floor covering.

6. Method for operating a vacuum cleaner (1) according to claim 5,
**characterised in that**
the evaluation circuit (18), when switching from the mode for the cleaning a first floor covering to the mode for cleaning a second floor covering, detects the nature of the second floor covering by measuring the change in rotation speed (Δn₂) during this switch.

7. Method for operating a vacuum cleaner (1) according to at least one of the preceding claims,
**characterised in that**
a universal motor is used as a fan motor (14).

8. Method for operating a vacuum cleaner (1) according to at least one of claims 1 to 6, **characterised in that**
an electronically commutated motor is used as a fan motor (14).

9. Method for operating a vacuum cleaner (1) according to claim 8,
**characterised in that**
a switched reluctance motor (141) is used as a fan motor (14).

## Revendications

1. Procédé de fonctionnement d'un aspirateur (1) avec un ventilateur aspirant (2) qui est entraîné par un moteur de ventilateur électrique (3), et avec un dispositif de régulation (15) qui agit sur le moteur de ventilateur (14) et qui prédéfinit en tant que grandeur de réglage la puissance de moteur (P1, P1 i) ou un paramètre influençant la puissance de moteur (P1, P1i), le débit (q) produit par le ventilateur aspirant (2) étant influencé en tant que grandeur de réglage au moyen du dispositif de régulation,
**caractérisé en ce**
**qu'**un circuit d'analyse (18), éventuellement avec utilisation d'un capteur (19), détermine la nature du revêtement de sol à traiter, et en ce que le dispositif de régulation (15) influence, en fonction du revêtement de sol déterminé, la puissance de moteur (P1, P1i) ou le paramètre influençant la puissance de moteur (P1, P1i) de sorte qu'il se manifeste une valeur de débit (q_{ref1}) qui est fonction du revêtement de sol.

2. Procédé de fonctionnement d'un aspirateur (1) selon la revendication 1,
**caractérisé en ce que**
dispositif de régulation (15) affecte soit à une première catégorie soit à une deuxième catégorie la nature du sol déterminée par le circuit d'analyse (18), et **en ce que**, en présence de la première catégorie, dispositif de régulation (15) règle une première valeur de débit (q_{ref1}) et, en présence de la deuxième catégorie, règle une deuxième valeur de débit (q_{ref2}).

3. Procédé de fonctionnement d'un aspirateur (1) selon la revendication 2,
**caractérisé en ce que**
la première catégorie comporte essentiellement des sols lisses et la deuxième catégorie comprend essentiellement des tapis, et **en ce que** la première valeur (q_{ref1}) est supérieure à la deuxième valeur (q_{ref2}).

4. Procédé de fonctionnement d'un aspirateur (1) selon l'une des revendications 1 à 3, **caractérisé en ce que**
le circuit d'analyse (18) détermine la nature du revêtement de sol au moyen d'un capteur de revêtement de sol (19) optique ou acoustique.

5. Procédé de fonctionnement d'un aspirateur (1) selon l'une des revendications 1 à 3, **caractérisé en ce que**
le circuit d'analyse (18) détecte la nature d'un premier revêtement de sol par la mesure de la variation de la vitesse de rotation (Δn₁) lors du passage du fonctionnement à vide au fonctionnement de nettoyage du premier revêtement de sol.

6. Procédé de fonctionnement d'un aspirateur (1) selon la revendication 5,
**caractérisé en ce que**
le circuit d'analyse (18), lors d'un passage du fonctionnement de nettoyage d'un premier revêtement de sol au fonctionnement de nettoyage d'un deuxième revêtement de sol, détecte la nature du deuxième revêtement de sol par la mesure de la variation de la vitesse de rotation (Δn₂) lors de ce passage.

7. Procédé de fonctionnement d'un aspirateur (1) selon au moins une des revendications précédentes,
**caractérisé en ce**
**qu'**un moteur universel est utilisé comme moteur de ventilateur (14).

8. Procédé de fonctionnement d'un aspirateur (1) selon au moins une des revendications 1 à 6,
**caractérisé en ce**
**qu'**un moteur à commutation électronique est utilisé comme moteur de ventilateur (14).

9. Procédé de fonctionnement d'un aspirateur (1) selon la revendication 8,
**caractérisé en ce**
**qu'**un moteur à réluctance commutée (141) est utilisé comme moteur de ventilateur (14).
